(19) Europäisches Patentamt
European Patent Office
Office européen des brevets

(11) **EP 2 569 969 B1**

(12) **EUROPEAN PATENT SPECIFICATION**

(45) Date of publication and mention
of the grant of the patent:
**29.08.2018 Bulletin 2018/35**

(51) Int Cl.:
***H04W 72/12*** *(2009.01)*

(21) Application number: **10851177.5**

(22) Date of filing: **10.05.2010**

(86) International application number:
**PCT/CN2010/000653**

(87) International publication number:
**WO 2011/140670 (17.11.2011 Gazette 2011/46)**

(54) **TDM SCHEDULING METHOD AND DEVICE FOR SCHEDULING UPLINK TRANSMISSIONS**

TDM-PLANUNGSVERFAHREN UND VORRICHTUNG ZUR PLANUNG VON UPLINK-ÜBERTRAGUNGEN

PROCÉDÉ ET DISPOSITIF DE PROGRAMMATION D'UN MULTIPLEXAGE PAR RÉPARTITION DANS LE TEMPS (TDM) PERMETTANT DE PROGRAMMER DES TRANSMISSIONS SUR LA LIAISON MONTANTE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.03.2013 Bulletin 2013/12**

(73) Proprietor: **Telefonaktiebolaget LM Ericsson (publ)**
**164 83 Stockholm (SE)**

(72) Inventors:
• **LIU, Jinhua**
**Beijing 100102 (CN)**
• **MIAO, Qingyu**
**Beijing 100102 (CN)**

(74) Representative: **Brann AB**
**P.O. Box 3690**
**Drottninggatan 27**
**103 59 Stockholm (SE)**

(56) References cited:
**WO-A1-2009/080081    CN-A- 101 005 326**
**CN-A- 101 273 551    CN-A- 101 534 507**

• JANI PUTTONEN ET AL: "Impact of Control Channel Limitations on the LTE VoIP Capacity", NETWORKS (ICN), 2010 NINTH INTERNATIONAL CONFERENCE ON, IEEE, PISCATAWAY, NJ, USA, 11 April 2010 (2010-04-11), pages 77-82, XP031681859, ISBN: 978-1-4244-6083-0

**Description**

Technical Field

The present invention relates to cellular radio communications, in particular to a Time Division Multiplexing (TDM) scheduling method and device for scheduling Uplink transmissions in a cellular radio communication system.

Background

In the cellular radio communication system, such as an Enhanced Uplink (EUL) system, User Equipments (UE) share the interference in uplink. In order to keep the stability as well as the uplink coverage of the system, there is an upper limit of uplink interference for each cell, which is usually in term of Rise over Thermal (RoT) target or Received Total Wideband Power (RTWP) target. The general EUL description is given in 3GPP specification, "3GPP TS 25.309 v6.6.0, FDD enhanced uplink; Overall description; Stage 2".

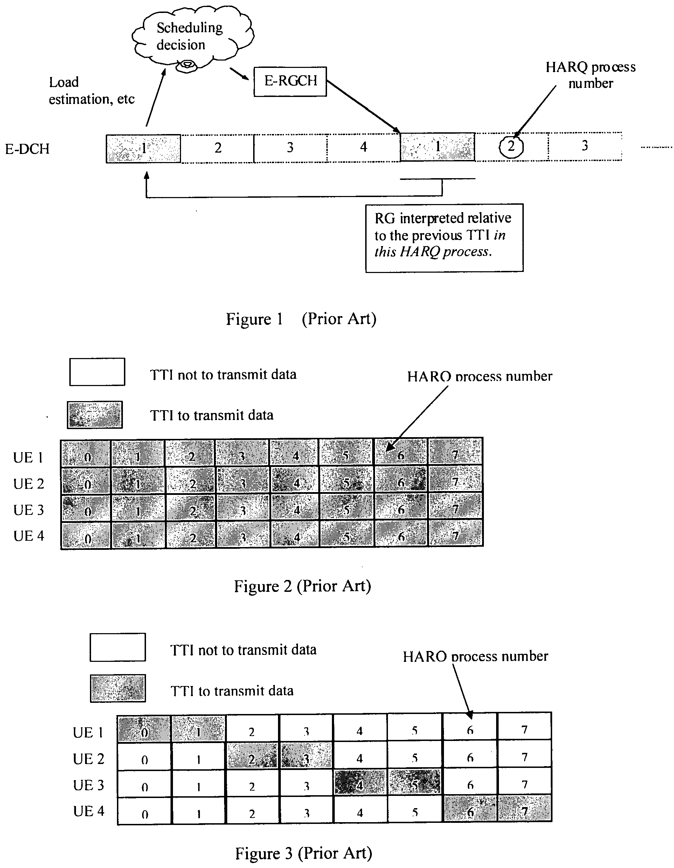

The uplink scheduler allocates the uplink interference among the UEs within the given interference limit by sending grants to UEs. With the current 3GPP specification, there are 2-ms and 10-ms Transmission Time Interval (TTI) lengths. For 10-ms TTI length, there are 4 Hybrid Automatic Repeat Request (HARQ) processes in a HARQ round trip, where the absolute grant is applied to all HARQ processes when it is received. For the 2-ms length, there are 8 HARQ processes in a HARQ round trip, where one absolute grant can be used to set the grant for all HARQ processes or one specific HARQ process. For both 2-ms and 10-ms TTI length, a serving or non-serving relative grant is used to adjust the grant for a HARQ process individually. Figure 1 illustrates how a relative grant adjusts the serving grant of a HARQ process. A serving or non-serving relative grant is interpreted relative to the UE power ratio in the previous TTI for the same hybrid ARQ process as the transmission which the relative grant will affect. Using the grant mechanism specified in the above 3GPP specification, the HARQ process specific grant setting is doable, which means that a UE can be scheduled to transmit by configuring non-zero grants in some HARQ processes and not to transmit by configuring zero grant in the rest HARQ processes.

According to whether the HARQ process specific grant allocation is used or not, the uplink scheduling strategy can be divided into two types: Code Division Multiplexing (CDM) and TDM. Figure 2 illustrates a CDM scheduling example. With CDM scheduling scheme, all UEs are scheduled to transmit in each TTI. Figure 3 illustrates a 4-UE TDM scheduling example where only one UE are allowed to transmit in each TTI.

As more advanced features, such as multiple receiver antennas, advanced receivers and Continuous Packet Connectivity (CPC), are introduced into the EUL system, the Uplink interface capability is improved. It is possible that the Uplink Uu capability is even larger than the UE capability as the evolving of the EUL system. In order to efficiently utilize the UL capability of Uu interface and serve more UEs, one or multiple rather than always single UE may be scheduled to transmit simultaneously in one TTI with TDM scheduling.

In other words, a group of UEs may be allowed to transmit for each HARQ process instead of that always single UE is allowed to transmit in one TTI with TDM scheduling in order to maximize the system performance. In Patent No. US7047016, Method and Apparatus for Allocating Uplink Resources in a MIMO Communication System, the UEs are grouped based on the channel response by estimating the performance of all sub-hypothesis and channel response and a particular order is selected to process the received signals of these UEs for better Successive Interference Cancellation (SIC) effect.

The existing scheduling proposals in MU-MIMO area rely too much on the channel response measurement which means the high cost to use them in the real product because:

 1) The channel response measurement should be introduced in physical layer and the channel correlation between different UEs should be estimated, which not only means a high implementation complexity but also a high computation complexity;
 2) The interaction between Media Access Control (MAC) scheduler and physical layer is increased which results in the flexibility loss of MAC scheduler.

Another problem is that since the channels of all UEs are changing very fast, the channel measurement accuracy and delay weaken the gain by such kinds of complex solutions. Documents WO 2009/080081 A1 (TELECOM ITALIA SPA [IT]; ANDREOZZI MATTEO [IT]; BACIOCCOLA ANDREA [IT]) 2 July 2009 (2009-07-02) and JANI PUTTONEN ET AL: "Impact of Control Channel Limitations on the LTE VoIP Capacity", NETWORKS (ICN), 2010 NINTH INTERNATIONAL CONFERENCE ON, IEEE, PISCATAWAY, NJ, USA, 11 April 2010 (2010-04-11), pages 77-82, XP031681859, ISBN: 978-1-4244-6083-0 are prior art documents.

Summary

The invention is defined in independent claims 1 (method), 9 (device), 12 (computer readable medium) and 13 (computer program).

This invention proposes a TDM scheduling method of low complexity for scheduling of TDM UEs in a cell, wherein the TDM UEs refer to the UEs to be scheduled according to the TDM scheduling method of the present invention in the cell. Instead of scheduling based on using the explicit channel response as shown in the prior arts, this invention uses scheduling parameters, such as, the UL pilot quality (e.g. one or more of DPCCH CINR, DPCCH SINR, DPCCH RSCP or DPCCH SNR) to estimate the number of TDM UEs that may be scheduled to transmit simultaneously in one TTI together with other inputs such as the available TDM load, the UL receiver capability and quality of service (QoS).

In one aspect of the invention, a TDM scheduling method for scheduling uplink transmission in a cellular radio communication system is provided, which includes: obtaining relevant parameters including an Uplink pilot quality for each TDM UE in a cell and an available TDM load for TDM UEs in the cell; determining a TDM group size as a number of TDM UEs to be scheduled to transmit simultaneously in a TTI by using the obtained relevant parameters; and scheduling the TDM UEs according to the determined TDM group size.

In a further aspect of the invention, a TDM scheduling device for scheduling uplink transmission in a cellular radio communication system is provided, which includes: an obtaining module for obtaining relevant parameters including an Uplink pilot quality for each TDM UE in a cell and an available TDM load for TDM UEs in the cell; a determining module for determining a TDM group size as a number of TDM UEs to be scheduled to transmit simultaneously in a TTI by using the obtained relevant parameters; and a scheduling module for scheduling the TDM UEs according to the determined TDM group size.

The invention also proposes a computer program product containing a computer readable medium having thereon computer program code means adapted, when the program is loaded onto a computing apparatus, to make the computing apparatus execute the TDM scheduling method according to the invention. Meanwhile, the invention proposes a computer program, distributable by electronic data transmission, containing computer program code means adapted, when the program is loaded onto a computing apparatus, to make the computing apparatus execute the TDM scheduling method according to the invention.

With the solution of the invention, the UL system performance can be improved. And the proposed solution is easy to be implemented.

Brief description of the drawings

In the following section, the invention will be described with reference to exemplary embodiments illustrated in the drawings, in which:

Figure 1 illustrates Timing relation for Relative Grant (10-ms TTI) in prior art;
Figure 2 illustrates a CDM scheduling example with 4 UEs (2-ms TTI) in prior art;
Figure 3 illustrates a 4-UEs TDM scheduling example with singe UE per TTI in prior art;
Figure 4 illustrates a TDM scheduling method in EUL system of the present invention;
Figure 5 illustrates an exemplary embodiment for performing the step of determining a TDM group size;
Figure 6 illustrates a schematic diagram of a cellular radio communication system;
Figure 7 illustrates a structural block diagram of a TDM scheduling device in the present invention; and
Figure 8 illustrates a structural block diagram of the determining module in the TDM scheduling device shown in Figure 7.

Detailed Description

Embodiments of the present invention will be described by referring to the accompanying drawings.

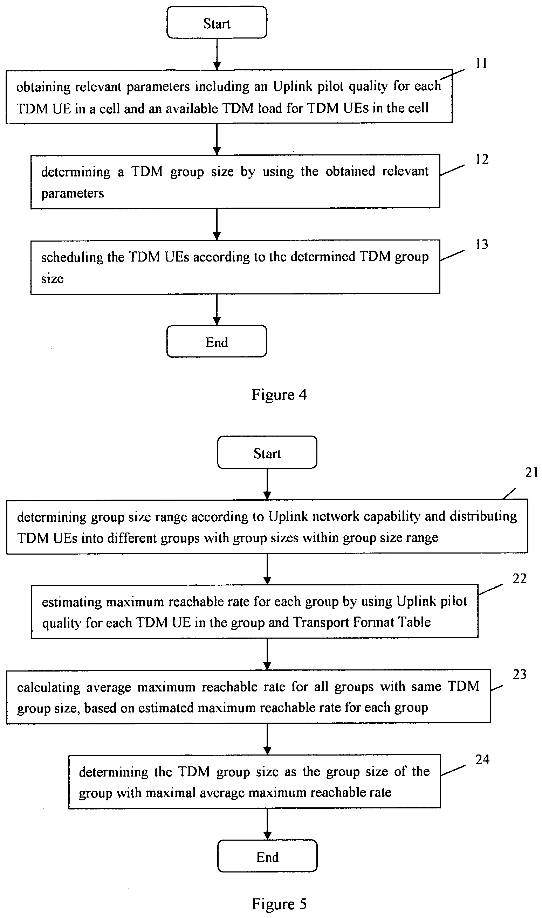

Figure 4 illustrates a TDM scheduling method in a EUL system of the present invention. As illustrated in step 11, relevant parameters for a certain cell are obtained. The relevant parameters include an Uplink pilot quality for each TDM UE in the cell, such as one or more of DPCCH CINR, DPCCH SINR, DPCCH RSCP or DPCCH SNR, and an available TDM load for TDM UEs in the cell. In step 12, a TDM group size is determined by using the relevant parameters obtained in step 11. The TDM group size is defined as the number of TDM UEs to be scheduled to transmit simultaneously in a certain TTI. In step 13, the TDM UEs are scheduled according to the TDM group size determined in step 12.

Figure 5 illustrates an exemplary embodiment for performing the step of determining a TDM group size. In step 21, a group size range is determined according to the uplink Uu capability and the TDM UEs are distributed into different groups with the group sizes within the group size range, wherein a certain UE can be distributed in multiple groups; In step 22, for each group, the available TDM load is tentatively allocated to each TDM UE in the group according to a given load allocation strategy, and then the maximum reachable rate of each group is estimated using Uplink pilot quality for each TDM UE in the group and a given Transport Format Table; in step 23, an average maximum reachable rate for all groups with same TDM group size is calculated based on the estimated maximum reachable rate for each group; and in step 24, the TDM group size is determined as the group size of the group with a maximal average maximum reachable rate.

In particular, an example is illustrated as follows. Assume there are N TDM UEs in a certain cell. The number of TDM UEs that should be scheduled to transmit in a TTI is referred as TDM group size in the following. The TDM group size can be estimated by the following steps:

Step 1: List a part of or all possible TDM UE groups with the groupSize = 1, 2, 3, ... ,M (M < N), where M is the maximum TDM group size based on the UL network capability, which should be a constant value for a given network.
Step 2: Estimate the maximum reachable rate for each group.

a. For a certain group, assume the available TDM load for a TDM UE in this group is $L_{TDM}$ / groupSize, where groupSize is the number of TDM UEs in this group.
b. Estimate the maximum reachable rate for each TDM UE in this group and the maximum reachable rate of this group by summing up the maximum reachable rates of all TDM UEs in this group, based on the algorithm described hereinafter.

Step 3: For all groups with the same groupSize, calculate the average maximum reachable rate based on the estimated maximum reachable rate according to Step 2.
Step 4: Determine the TDM group size. The TDM group size is equal to the group size with a maximal average maximum reachable rate calculated from Step 3.

The TDM scheduler should schedule the number of TDM UEs to transmit simultaneously in the TTI according to the group size determined in step 4.
The TDM group size may be updated in various ways. For example, the TDM group size is updated by repeating the above steps as the available TDM load varies. Alternatively, the TDM group size is updated periodically by repeating the above steps.
The following descriptions give an illustration for the algorithm that may be used during the implementation. The available TDM load for TDM UEs in a certain cell can be estimated in the following formula (1):

$$L_{TDM} = L_{MAX} - L_{dch} - L_{edch,CDM} - L_{hsdpcch} - L_{other} \qquad (1)$$

Where $L_{MAX}$ is the maximum available load in the cell, $L_{DCH}$ is the load taken by DCH channels of all UEs, $L_{edch,CDM}$ is the load taken by the EUL UEs in CDM scheduling mode, $L_{hsdpcch}$ is the load taken by HS-DPCCH and $L_{other}$ is the load taken by the unmonitored interference.
According to the load estimation formula for the i-th UE can be estimated by Formula (2):

$$L_i = \frac{\gamma^i_{dpcch} \cdot (1 + \Delta_{edpcch} + \Delta^i_{edch})}{antGain + (1-\alpha) \cdot \gamma^i_{dpcch} \cdot (1 + \Delta_{edpcch} + \Delta^i_{edch})} \qquad (2)$$

Where $L_i$ is the allocated load for the i-th UE, $\gamma^i_{dpcch}$ is the DPCCH CINR target or measured DPCCH CINR of the i-th UE, $\Delta_{edpcch}$ is the power offset of E-DPCCH UEs, $\Delta^i_{edch}$ is the E-DCH power offset of the i-th UE, *antGain* is the antenna gain and $\alpha$ is the orthogonality factor of this UE.
When a certain TDM load is allocated for the i-th UE, the maximum E-DCH power offset for this UE can be calculated by Formula (3) :

$$\Delta^i_{edch} = \frac{L_i \cdot antGain}{\gamma^i_{dpcch} (1 - L_i + \alpha \cdot L_i)} - 1 - \Delta_{edpcch} \qquad (3)$$

With the maximum E-DCH power offset by Formula (3), the maximum E-TFC that the UE is allowed to use can be looked up from a given E-TFC table. The relationship between the maximum E-DCH power offset and a Transport block size is defined in the E-TFC table, and then the maximum reachable rate for the i-th TDM UE in the group is calculated from the Transport block size.

Because the UL pilot quality measurement is already implemented (e.g. The DPCCH CINR is measured per slot for inner loop power control) in the existing EUL system, the complex implementation and computation can be saved.

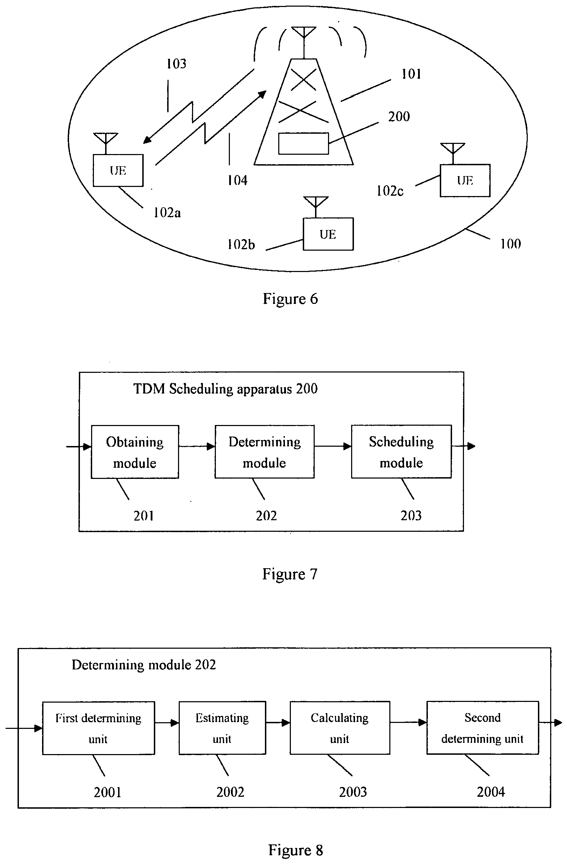

As shown in Figure 6, a schematic diagram of a cellular radio communication system 100 is provided, including a radio base station 101 serving a cell, which is alternatively referred to as Node B, and UEs (such as 102a, 102b and 102c) operating in the cell. A downlink transmission 103 generally refers to communications in a direction from the radio base station to the UEs. An uplink transmission 104 generally refers to communications in a direction from the UEs to the radio base station. The radio base station 101 contains a TDM scheduling device 200 for scheduling uplink transmissions in a cellular radio communication system.

Figure 7 illustrates a structural block diagram of a TDM scheduling device 200 according to an embodiment of the present invention. The TDM scheduling device 200 includes: an obtaining module 201 for obtaining relevant parameters including an Uplink pilot quality for each TDM UE in a cell and an available TDM load for TDM UEs in the cell; a determining module 202 for determining a TDM group size by using the obtained relevant parameters, wherein the TDM group size is defined as a number of TDM UEs to be scheduled to transmit simultaneously in one TTI; and a scheduling module 203 for scheduling the TDM UEs according to the determined TDM group size.

Preferably, as Figure 8 shows, the determining module 202 may further include: a first determining unit 2001, adapted to determine a group size range according to Uplink network capability and distribute the TDM UEs into different groups with various group sizes; an estimating unit 2002, adapted to estimate a maximum reachable rate for each group by using the Uplink pilot quality for each TDM UE in the group and a E-TFC Table; a calculating unit 2003, adapted to calculate an average maximum reachable rate for all groups with the same TDM group size based on the estimated maximum reachable rate for each group; and a second determining unit 2004, adapted to determine the TDM group size as the group size of the group with a maximal average maximum reachable rate.

Preferably, the estimating unit 2002 may further include: an allocating sub-unit, adapted to, for each group, tentatively allocate an available TDM load of the cell to each TDM UE in the group according to a given load allocation strategy; and an estimating sub-unit, adapted to estimate a maximum reachable rate for each TDM UE in each group, and a maximum reachable rate of each group by summing up the maximum reachable rates of all TDM UEs in the group.

Although the present invention has been particularly shown and described with reference to exemplary embodiments thereof, it will be understood by those skilled in the art that various changes in form and details may be made without departing from the scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

Abbreviation terms:

DCH: Dedicated Channel
E-DCH: Enhanced Dedicated Channel
DPCCH: Dedicated Physical Control Channel
E-DPCCH: Enhanced Dedicated Physical Control Channel
CINR: Carrier to Interference plus Noise Ratio
RSCP: Received Signal Code Power
SNR: Signal-Noise Ratio
TTI: Transmission Time Interval
TDM: Time Division Multiplexing
CDM: Code Division Multiplexing
UL: Uplink
EUL: Enhanced Uplink
SIC: Successive Interference Cancellation
E-TFC: E-DCH Transport Format Combination
CQI: Channel Quality Indicator
SINR: Signal to Interference plus Noise Ratio
MU-MIMO: Multi-User Multi-Input-Multi-Output
UE: User Equipment

HARQ: Hybrid Automatic Repeat Request
RoT: Rise Over Thermal
RTWP: Received Total Wideband Power
CPC: Continuous Packet Connectivity

**Claims**

1. A Time Division Multiplexing, TDM, scheduling method for scheduling uplink transmission in a cellular radio communication system (100), comprising:

   obtaining (11) relevant parameters including an Uplink pilot quality for each TDM User Equipment, UE, in a cell and an available TDM load for TDM UEs in the cell;
   determining (12) a TDM group size as a number of TDM UEs to be scheduled to transmit simultaneously in a Transmission Time Interval, TTI, by using the obtained relevant parameters; and scheduling (13) the TDM UEs according to the determined TDM group size; **characterized in that** the method further comprises: updating the determined TDM group size in response to changes in the available TDM load.

2. The method according to claim 1, wherein the relevant parameters further comprises: an Uplink receiver capability and Quality of Service.

3. The method according to claim 1 or 2, wherein the step of determining (12) a TDM group size further comprises:

   (a) determining (21) a group size range according to Uplink network capability and distributing the TDM UEs into different groups with group sizes within the group size range;
   (b) estimating (22) a maximum reachable rate for each group by using the Uplink pilot quality for each TDM UE in the group and a Transport Format Table;
   (c) calculating (23) an average maximum reachable rate for all groups with the same TDM group size, based on the estimated maximum reachable rate for each group;
   (d) determining (24) the TDM group size as the group size of the group with a maximal average maximum reachable rate; and
   (e) updating the determined TDM group size by iterating step (a) to (d) in response to changes in the available TDM load.

4. The method according to claims 3, wherein the step of estimating a maximum reachable rate for each group further comprises:

   for each group, tentatively allocating an available TDM load of the cell to each TDM UE in the group according to a given load allocation strategy; and
   estimating a maximum reachable rate for each TDM UE in each group and a maximum reachable rate of each group by summing up the maximum reachable rates of all TDM UEs in the group.

5. The method according to claim 3, wherein the step of distributing the TDM UEs into different groups further comprises: distributing a certain TDM UE into multiple groups.

6. The method according to claim 4, wherein the available TDM load of the cell, $L_{TDM}$, is estimated by a formula as below:

$$L_{TDM} = L_{MAX} - L_{dch} - L_{edch,CDM} - L_{hsdpcch} - L_{other}$$

Where $L_{MAX}$ is a maximum available TDM load in the cell, $L_{DCH}$ is a load taken by DCH channels of all UEs, $L_{edch,CDM}$ is a load taken by the Enhanced Uplink UEs in CDM scheduling mode, $L_{hsdpcch}$ is a load taken by HS-DPCCH and $L_{other}$ is a load taken by interference not monitored.

7. The method according to claim 6, wherein an available TDM load allocated to each TDM UE in the group is $L_{TDM}$/groupsize, $L_i$.

8. The method according to claim 1, wherein the Uplink pilot quality includes one or more of DPCCH CINR, DPCCH SINR, DPCCH RSCP, or DPCCH SNR.

9. A Time Division Multiplexing, TDM, scheduling device (200) for scheduling uplink transmission in a cellular radio communication system (100), comprising:

an obtaining module (201), adapted to obtain relevant parameters including an Uplink pilot quality for each TDM User Equipment, UE, in a cell and an available TDM load for TDM UEs in the cell;
a determining module (202), adapted to determine a TDM group size as a number of TDM UEs to be scheduled to transmit simultaneously in a Transmission Time Interval, TTI, by using the obtained relevant parameters; and
a scheduling module (203), adapted to schedule the TDM UEs according to the determined TDM group size; **characterized in that** the determining module (202) is further adapted to update the determined TDM group size in response to changes in the available load.

10. The device according to claim 9, wherein the determining module (202) further comprises:

a first determining unit (2001), adapted to determine a group size range according to Uplink network capability and distribute the TDM UEs into different groups with group sizes within the group size range;
an estimating unit (2002), adapted to estimate a maximum reachable rate for each group by using the Uplink pilot quality for each TDM UE in the group and a Transport Format Table;
a calculating unit (2003), adapted to calculate an average maximum reachable rate for all groups with the same TDM group size, based on the estimated maximum reachable rate for each group; and
a second determining unit (2004), adapted to determine the TDM group size as the group size of the group with a maximal average maximum reachable rate,
wherein the task of the first determining unit (2001), the estimating unit (2002), the calculating unit (2003) and the second determining unit (2004) is sequentially iterated for updating the determined TDM group size in response to changes in the available TDM load.

11. The device according to claim 10, wherein the estimating unit (2002) further comprises:

an allocating sub-unit, adapted to, for each group, tentatively allocate an available TDM load of the cell to each TDM UE in the group according to a given load allocation strategy; and
an estimating sub-unit, adapted to estimate a maximum reachable rate for each TDM UE in each group, and a maximum reachable rate of each group by summing up the maximum reachable rates of all TDM UEs in the group.

12. A computer readable medium having thereon computer program code means adapted, when the program is executed by a computing apparatus, to make the computing apparatus execute one of the methods of claims 1-8.

13. A computer program, distributable by electronic data transmission, comprising computer program code means adapted, when the program is executed by a computing apparatus, to make the computing apparatus execute one of the methods of claims 1-8.


**Patentansprüche**

1. Zeitmultiplex-(Time Division Multiplex - TDM)-Planungsverfahren zur Planung einer Uplink-Übertragung in einem zellularen Funkkommunikationssystem (100), wobei das Verfahren Folgendes umfasst:

Erhalten (11) von relevanten Parametern, einschließlich einer Uplink-Pilotqualität für jedes TDM-Benutzergerät (UE) in einer Zelle und einer verfügbaren TDM-Last für die TDM-UEs in der Zelle;
Bestimmen (12) einer TDM-Gruppengröße als einer Anzahl von TDM-UEs, die unter Verwendung der erhaltenen relevanten Parameter geplant werden sollen, um gleichzeitig in einem Übertragungszeitintervall (Transmission Time Intervall - TTI) zu übertragen;
und
Planen (13) der TDM-UEs gemäß der bestimmten TDM-Gruppengröße;
**dadurch gekennzeichnet, dass** das Verfahren ferner Folgendes umfasst:
Aktualisieren der bestimmten TDM-Gruppengröße als Reaktion auf Veränderungen in der verfügbaren TDM-Last.

2. Verfahren nach Anspruch 1, wobei die relevanten Parameter ferner Folgendes umfassen: eine Uplink-Empfängerfähigkeit und eine Dienstqualität.

3. Verfahren nach einem der Ansprüche 1 oder 2, wobei der Schritt des Bestimmens (12) einer TDM-Gruppengröße ferner Folgendes umfasst:

(a) Bestimmen (21) eines Gruppengrößenbereichs gemäß einer Uplink-Netzwerkfähigkeit und Verteilen der TDM-UEs in verschiedene Gruppen mit Gruppengrößen innerhalb des Gruppengrößenbereichs;
(b) Schätzen (22) einer erreichbaren Maximalrate für jede Gruppe unter Verwendung der Uplink-Pilotqualität für jedes TDM-UE in der Gruppe und einer Transportformattabelle;
(c) Berechnen (23) einer durchschnittlichen erreichbaren Maximalrate für alle Gruppen mit derselben TDM-Gruppengröße basierend auf der geschätzten erreichbaren Maximalrate für jede Gruppe;
(d) Bestimmen (24) der TDM-Gruppengröße als der Gruppengröße der Gruppe mit einer maximalen durchschnittlichen erreichbaren Maximalrate; und
(e) Aktualisieren der bestimmten TDM-Gruppengröße durch ein Wiederholen der Schritte (a) bis (d) als Reaktion auf Veränderungen in der verfügbaren TDM-Last.

4. Verfahren nach Anspruch 3, wobei der Schritt des Schätzens einer erreichbaren Maximalrate für jede Gruppe ferner Folgendes umfasst:

für jede Gruppe vorläufiges Zuweisen einer verfügbaren TDM-Last der Zelle an jedes TDM-UE in der Gruppe gemäß einer vorgegebenen Lastzuweisungsstrategie; und
Schätzen einer erreichbaren Maximalrate für jedes TDM-UE in jeder Gruppe und einer erreichbaren Maximalrate für jede Gruppe durch ein Zusammenfassen der erreichbaren Maximalraten aller TDM-UEs in der Gruppe.

5. Verfahren nach Anspruch 3, wobei der Schritt des Verteilens der TDM-UEs in verschiedene Gruppen ferner Folgendes umfasst: Verteilen eines bestimmten TDM-UE in mehrere Gruppen.

6. Verfahren nach Anspruch 4, wobei die verfügbare TDM-Last der Zelle ($L_{TDM}$) durch eine im Folgenden angezeigte Formel geschätzt wird:

$$L_{TDM} = L_{MAX} - L_{dch} - L_{edch,\ CDM} - L_{hsdpcch} - L_{andere}$$

wobei $L_{MAX}$ eine maximale verfügbare TDM-Last in der Zelle ist, $L_{dch}$ eine Last ist, die von DCH-Kanälen aller UEs beansprucht wird, $L_{edch,\ CDM}$ eine Last ist, die von erweiterten Uplink-UEs in einem CDM-Planungsmodus beansprucht wird, $L_{hsdpcch}$ eine Last ist, die von einem HS-DPCCH beansprucht wird, und $L_{andere}$ eine Last ist, die von einer nicht überwachten Interferenz beansprucht wird.

7. Verfahren nach Anspruch 6, wobei die verfügbare TDM-Last, die jedem TDM-UE in der Gruppe zugewiesen wird, $L_{TDM}$/Gruppengröße ($L_i$) ist.

8. Verfahren nach Anspruch 1, wobei die Uplink-Pilotqualität eines oder mehrere von einem DPCCH CINR, einem DPCCH SINR, einer DPCCH RSCP oder einem DPCCH SNR einschließt.

9. Zeitmultiplex-(TDM)-Planungseinrichtung (200) zur Planung einer Uplink-Übertragung in einem zellularen Funkkommunikationssystem (100), wobei die Einrichtung Folgendes umfasst:

ein Erhaltungsmodul (201), das angepasst ist, um relevante Parameter einschließlich einer Uplink-Pilotqualität für jedes TDM-Benutzergerät (UE) in einer Zelle und einer verfügbaren TDM-Last für die TDM-UE in der Zelle zu erhalten;
ein Bestimmungsmodul (202), das angepasst ist, um eine TDM Gruppengröße als eine Anzahl von TDM-UEs zu bestimmen, die unter Verwendung der relevanten Parameter für eine simultane Übertragung in einem Übertragungszeitintervall (TTI) geplant werden sollen; und
ein Planungsmodul (203), das angepasst ist, um die TDM-UEs gemäß der bestimmten TDM-Gruppengröße zu planen;
**dadurch gekennzeichnet, dass** das Bestimmungsmodul (202) ferner angepasst ist, um die bestimmte TDM-Gruppengröße als Reaktion auf Veränderungen in der verfügbaren Last zu aktualisieren.

**10.** Einrichtung nach Anspruch 9, wobei das Bestimmungsmodul (202) ferner Folgendes umfasst:

eine erste Bestimmungseinheit (2001), die angepasst ist, um einen Gruppengrößenbereich gemäß einer Uplink-Netzwerkfähigkeit zu bestimmen und die TDM-UEs in verschiedene Gruppen mit Gruppengrößen innerhalb des Gruppengrößenbereichs zu verteilen;
eine Schätzeinheit (2002), die angepasst ist, um unter Verwendung der Uplink-Pilotqualität für jedes TDM-UE in der Gruppe und einer Transportformattabelle eine erreichbare Maximalrate für jede Gruppe zu schätzen;
eine Berechnungseinheit (2003), die angepasst ist, um basierend auf der geschätzten erreichbaren Maximalrate für jede Gruppe eine durchschnittliche erreichbare Maximalrate für alle Gruppen mit derselben TDM Gruppengröße zu berechnen; und
eine zweite Bestimmungseinheit (2004), die angepasst ist, um die TDM-Gruppengröße als die Gruppengröße der Gruppe mit einer maximalen durchschnittlichen erreichbaren Maximalrate zu bestimmen,
wobei die Aufgabe der ersten Bestimmungseinheit (2001), der Schätzeinheit (2002), der Berechnungseinheit (2003) und der zweiten Bestimmungseinheit (2004) im Wesentlichen durchlaufen wird, um die bestimmte TDM-Gruppengröße als Reaktion auf Veränderungen in der verfügbaren TDM-Last zu aktualisieren.

**11.** Einrichtung nach Anspruch 10, wobei die Schätzeinheit (2002) ferner Folgendes umfasst:

eine Zuweisungsuntereinheit, die angepasst ist, um gemäß einer gegebenen Lastzuweisungsstrategie für jede Gruppe vorläufig eine verfügbare TDM-Last der Zelle an jedes TDM-UE in der Gruppe zuzuweisen; und
eine Schätzuntereinheit, die angepasst ist, um eine erreichbare Maximalrate für jedes TDM-UE in jeder Gruppe und eine erreichbare Maximalrate für jede Gruppe durch ein Zusammenfasen der erreichbaren Maximalraten aller TDM-UEs der Gruppe zu schätzen.

**12.** Computerlesbares Medium, auf dem Computerprogrammcodemittel sind, die angepasst sind, um, wenn das Programm von einer Computervorrichtung ausgeführt wird, die Computervorrichtung zu veranlassen, eines der Verfahren nach einem Ansprüche 1-8 auszuführen.

**13.** Computerprogramm, das durch elektronische Datenübertragung verteilt werden kann, wobei das Computerprogramm Computerprogrammcodemittel umfasst, die angepasst sind, um, wenn das Programm von einer Computervorrichtung ausgeführt wird, die Computervorrichtung zu veranlassen, eines der Verfahren nach einem der Ansprüche 1-8 auszuführen.

**Revendications**

**1.** Procédé de programmation d'un multiplexage par répartition dans le temps, TDM, pour programmer une transmission en liaison montante dans un système de communication radio cellulaire (100), comprenant :

l'obtention (11) de paramètres pertinents incluant une qualité de pilote en liaison montante pour chaque équipement d'utilisateur, UE, TDM, dans une cellule et une charge TDM disponible pour des UE TDM dans la cellule ;
la détermination (12) d'une taille de groupe TDM en tant que nombre d'UE TDM à programmer pour une transmission simultanée dans un intervalle de temps de transmission, TTI, à l'aide des paramètres pertinents obtenus ; et
la programmation (13) des UE TDM selon la taille de groupe TDM déterminée ;
**caractérisé en ce que** le procédé comprend en outre :
la mise à jour de la taille de groupe TDM déterminée en réponse à des changements de la charge TDM disponible.

**2.** Procédé selon la revendication 1, dans lequel les paramètres pertinents comprennent en outre : une capacité de récepteur en liaison montante et une qualité de service en liaison montante.

**3.** Procédé selon la revendication 1 ou 2, dans lequel l'étape de détermination (12) d'une taille de groupe TDM comprend en outre :

(a) la détermination (21) d'une plage de tailles de groupe selon une capacité de réseau en liaison montante et la distribution des UE TDM dans différents groupes avec des tailles de groupe à l'intérieur de la plage des tailles de groupe ;
(b) l'estimation (22) d'un débit réalisable maximal pour chaque groupe à l'aide de la qualité de pilote en liaison montante pour chaque UE TDM dans le groupe et d'une table de formats de transport ;
(c) le calcul (23) d'un débit réalisable maximal moyen pour tous les groupes avec la même taille de groupe TDM, sur la base du débit réalisable maximal estimé pour chaque groupe ;
(d) la détermination (24) de la taille de groupe TDM en tant que taille de groupe du groupe avec un débit réalisable maximal moyen maximal ; et
(e) la mise à jour de la taille de groupe TDM déterminée par itération des étapes (a) à (d) en réponse à des changements de la charge TDM disponible.

4.  Procédé selon la revendication 3, dans lequel l'étape d'estimation d'un débit réalisable maximal pour chaque groupe comprend en outre :

    pour chaque groupe, l'attribution à titre d'essai d'une charge TDM disponible de la cellule à chaque UE TDM dans le groupe selon une stratégie d'attribution de charge donnée ; et
    l'estimation d'un débit réalisable maximal pour chaque UE TDM dans chaque groupe et d'un débit réalisable maximal de chaque groupe par sommation des débits réalisables maximaux de tous les UE TDM dans le groupe.

5.  Procédé selon la revendication 3, dans lequel l'étape de distribution des UE TDM dans différents groupes comprend en outre : la distribution d'un certain UE TDM dans de multiples groupes.

6.  Procédé selon la revendication 4, dans lequel la charge TDM disponible de la cellule, $L_{TDM}$, est estimée par une formule ci-dessous :

$$L_{TDM} = L_{MAX} - L_{dch} - L_{edch,CDM} - L_{hsdpcch} - L_{other}$$

    où $L_{MAX}$ est une charge TDM maximale disponible dans la cellule, $L_{DCH}$ est une charge prise par des canaux DCH de tous les UE, $L_{edch,CDM}$ est une charge prise par les UE en liaison montante améliorée dans un mode de programmation CDM, $L_{hsdpcch}$ est une charge prise par HS-DPCCH et $L_{other}$ est une charge prise par interférence non surveillée.

7.  Procédé selon la revendication 6, dans lequel une charge TDM disponible attribuée à chaque UE TDM dans le groupe est $L_{TDM}$/taille de groupe, $L_i$.

8.  Procédé selon la revendication 1, dans lequel la qualité de pilote en liaison montante inclut un ou plusieurs parmi DPCCH CINR, DPCCH SINR, DPCCH RSCP ou DPCCH SNR.

9.  Dispositif de programmation d'un multiplexage par répartition dans le temps, TDM, (200) pour programmer une transmission en liaison montante dans un système de communication radio cellulaire (100), comprenant :

    un module d'obtention (201), adapté pour obtenir des paramètres pertinents incluant une qualité de pilote en liaison montante pour chaque équipement d'utilisateur, UE, TDM dans une cellule et une charge TDM disponible pour des UE TDM dans la cellule ;
    un module de détermination (202), adapté pour déterminer une taille de groupe TDM en tant que nombre d'UE TDM à programmer pour une transmission simultanée dans un intervalle de temps de transmission, TTI, à l'aide des paramètres pertinents obtenus ; et
    un module de programmation (203), adapté pour programmer les UE TDM selon la taille de groupe TDM déterminée ;
    **caractérisé en ce que**
    le module de détermination (202) est en outre adapté pour mettre à jour la taille de groupe TDM déterminée en réponse à des changements de la charge disponible.

10. Dispositif selon la revendication 9, dans lequel le module de détermination (202) comprend en outre :

    une première unité de détermination (2001), adaptée pour déterminer une plage de tailles de groupe selon une capacité de réseau en liaison montante et pour distribuer les UE TDM dans différents groupes avec des tailles de groupe à l'intérieur de la plage de tailles de groupe ;
    une unité d'estimation (2002), adaptée pour estimer un débit réalisable maximal pour chaque groupe à l'aide de la qualité de pilote en liaison montante pour chaque UE TDM dans le groupe et d'une table de formats de transport ;
une unité de calcul (2003), adaptée pour calculer un débit réalisable maximal moyen pour tous les groupes avec la même taille de groupe TDM, sur la base du débit réalisable maximal estimé pour chaque groupe ; et
une seconde unité de détermination (2004), adaptée pour déterminer la taille de groupe TDM en tant que taille de groupe du groupe avec un débit réalisable maximal moyen maximal,
dans lequel la tâche de la première unité de détermination (2001), de l'unité d'estimation (2002), de l'unité de calcul (2003) et de la seconde unité de détermination (2004) est séquentiellement itérée pour mettre à jour la taille de groupe TDM déterminée en réponse à des changements de la charge TDM disponible.

11. Dispositif selon la revendication 10, dans lequel l'unité d'estimation (2002) comprend en outre :

une sous-unité d'attribution, adaptée pour, pour chaque groupe, attribuer à titre d'essai une charge TDM disponible de la cellule à chaque UE TDM dans le groupe selon une stratégie d'attribution de charge donnée ; et
une sous-unité d'estimation, adaptée pour estimer un débit réalisable maximal pour chaque UE TDM dans chaque groupe, et un débit réalisable maximal de chaque groupe par sommation des débits réalisables maximaux de tous les UE TDM dans le groupe.

12. Support lisible par ordinateur sur lequel est disposé un moyen de code de programme d'ordinateur adapté, lorsque le programme est exécuté par un appareil informatique, pour amener l'appareil informatique à exécuter un des procédés selon les revendications 1 à 8.

13. Programme d'ordinateur, distribuable par une transmission de données électroniques, comprenant un moyen de code de programme d'ordinateur adapté, lorsque le programme est exécuté par un appareil informatique, pour amener l'appareil informatique à exécuter un des procédés selon les revendications 1 à 8.

Figure 1 (Prior Art)

Figure 2 (Prior Art)

Figure 3 (Prior Art)

Start

obtaining relevant parameters including an Uplink pilot quality for each 11
TDM UE in a cell and an available TDM load for TDM UEs in the cell

determining a TDM group size by using the obtained relevant 12
parameters

scheduling the TDM UEs according to the determined TDM group 13
size

End

Figure 4

Start

determining group size range according to Uplink network capability and distributing 21
TDM UEs into different groups with group sizes within group size range

estimating maximum reachable rate for each group by using Uplink pilot 22
quality for each TDM UE in the group and Transport Format Table

calculating average maximum reachable rate for all groups with same TDM 23
group size, based on estimated maximum reachable rate for each group

determining the TDM group size as the group size of the 24
group with maximal average maximum reachable rate

End

Figure 5

Figure 6

## TDM Scheduling apparatus 200

| Obtaining module | Determining module | Scheduling module |
|---|---|---|

201　　　　　　　　202　　　　　　　　203

Figure 7

## Determining module 202

| First determining unit | Estimating unit | Calculating unit | Second determining unit |
|---|---|---|---|

2001　　　　　　2002　　　　　　2003　　　　　　2004

Figure 8

**EP 2 569 969 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7047016 B

- WO 2009080081 A1

**Non-patent literature cited in the description**

- Impact of Control Channel Limitations on the LTE VoIP Capacity. **JANI PUTTONEN et al.** NETWORKS (ICN), 2010 NINTH INTERNATIONAL CONFERENCE ON. IEEE, 11 April 2010, 77-82